Europäisches Patentamt

European Patent Office

Office européen des brevets

(19)

(11) Veröffentlichungsnummer: **0 213 386 B1**

(12) **EUROPÄISCHE PATENTSCHRIFT**

(45) Veröffentlichungstag der Patentschrift: 06.03.91

(51) Int. Cl.⁵: **C09J 101/18, C04B 24/38**

(21) Anmeldenummer: **86110332.3**

(22) Anmeldetag: **26.07.86**

(54) Verfahren zum Verkleben von Fliesenbelägen.

(30) Priorität: **07.08.85 DE 3528266**

(43) Veröffentlichungstag der Anmeldung:
**11.03.87 Patentblatt 87/11**

(45) Bekanntmachung des Hinweises auf die
Patenterteilung:
**06.03.91 Patentblatt 91/10**

(84) Benannte Vertragsstaaten:
**AT BE DE FR GB IT**

(56) Entgegenhaltungen:
DE-C- 833 706
US-A- 2 281 483
US-A- 3 594 338

CHEMICAL ABSTRACTS, Band 80, 1974, Seite
63, Zusammenfassung Nr. 16029d, Colum-
bus, Ohio, US; & JP-A-73 68 635 (DAISEI
KAKO CO., LTD) 19-09-1973

(73) Patentinhaber: **Wolff Walsrode Aktiengesell-
schaft**
**Postfach**
**W-3030 Walsrode 1(DE)**

(72) Erfinder: **Hoppe, Lutz, Dr.**
**Am Badeteich 8**
**W-3030 Walsrode 1(DE)**
Erfinder: **Lühmann, Erhard**
**Kastanienweg 2**
**W-3036 Bomlitz(DE)**
Erfinder: **Höhl, Frank**
**Brockdorf 52**
**W-3044 Neuenkirchen(DE)**
Erfinder: **Reinhardt, Eugen**
**Geibelstrasse 57**
**W-3030 Walsrode 1(DE)**

(74) Vertreter: **Zobel, Manfred, Dr. et al**
**c/o BAYER AG Konzernverwaltung RP Pa-
tentabteilung Bayerwerk**
**W-5090 Leverkusen(DE)**

**Beschreibung**

Gegenstand der Erfindung ist ein Verfahren zum Verkleben von Fliesenbelägen auf Basis wasserverdünnbarer cellulosenitrathaltiger Pasten. Es ist bekannt, daß Harzdispersionen, wie z.B. Polyvinylacetat-Dispersionen, als Klebstoffe für keramische Fliesen eingesetzt werden können. Solche Klebstoffdispersionen haben aber den wesentlichen Nachteil, daß sie nicht wasserfest und daher zum Verfliesen in Naßräumen nicht geeignet sind.

Da aber Dispersionskleber einfacher handhabbar sind als die wasserfesten Fliesenkleber auf Zementbasis, war man bestrebt, die Dispersionskleber dahingehend zu verbessern, daß sie die genannten Nachteile nicht aufweisen.

Überraschenderweise gelingt dies, indem man die bekannten Klebstoffdispersionen für Fliesen mit einer wasserverdünnbaren Paste auf Basis Cellulosenitrat und einem Festkörper-Lösungsmittelverhältnis von $\geq 1$ abmischt.

Aus US-A 2 281 483 und Chemical Abstracts, Bd. 80, 1974, S.63, No. 16029d sind zwar bereits Klebstoffe bekannt, allerdings ohne jeden Hinweis auf das Verkleben von Fliesen.

Gegenstand der Erfindung ist daher ein Verfahren zum Verbleben von Fliesenbelägen dadurch gekennzeichnet, daß eine Klebstoffdispersion auf Basis von

1) 10 - 95, vorzugsweise 15 - 70 Gew.-% einer wasserverdünnbaren, cellulosenitrathaltigen Paste mit einem Feststoff zu Lösungsmittelverhältnis $> 1$

2) 0,1 - 50, vorzugsweise 2 - 40 Gew.-% eines Klebstoffdispersionsharzes oder in $H_2O$ emulgierbaren Klebstoffharzes

3) 0 - 70, vorzugsweise 0 - 65 Gew.-% eines Fliesenkleberfüllstoffes

4) 0 - 75, vorzugsweise 0 - 50 Gew.-% Wasser

5) 0 - 10, vorzugsweise 0 - 3 Gew.-% eines üblichen Verdickungsmittels, wobei die Summe aus 1) - 5) immer 100 % Gew.-% ergeben muß,

verwendet wird.

Solche wasserverdünnbaren, cellulosenitrathaltigen Pasten sind z.B. in der DE-A 3.139.840 beschrieben.

Diese zähflüssigen, cellulosehaltigen Gemische und Pasten bestehen vorzugsweise aus

5,0 - 60 Gew.-%, vorzugsweise 15 - 45 Gew.-% Cellulose-nitrat

0 - 55 Gew.-%, vorzugsweise 0 - 35 Gew,-% Harzen

0,5 - 55 Gew.-%, vorzugsweise 1 - 30 Gew.-% Weichmacher

0 - 20 Gew.-%, vorzugsweise 0 - 12,5 Gew.-% Emulgato-ren

0 - 45 Gew.-%, vorzugsweise 5 - 35 Gew.-% wenigstens eines organischen Lösungsmittels

0 - 30 Gew.-%, vorzugsweise 5 - 25 Gew.-% Wasser

und sind dadurch gekennzeichnet, daß 0,5 - 100 Gew.-% des Weichmachers aus wenigstens einem bekannten alkoxylierten Weichmacher bestehen und das Gewichtsverhältnis Feststoff Zu organischen Lösungsmitteln größer oder gleich 1 ist.

Sie werden vorzugsweise mit Wasser verdünnt, das in die organische Phase bei Temperaturen von höchstens 45° C, vorzugsweise 40° C in den gewünschten Mengen, vorzugsweise tropfenweise, zugegeben wird.

Als Cellulosenitrat eignen sich Nitrocellulose aller Viskositätsstufen oder plastifizierte Nitrocellulose oder deren Mischungen.

Ganz besonders geeignet ist Nitrocellulose, beispielsweise die üblichen Colloidiumwollequalitäten, d.h., Cellulosesalpetersäureester mit einem Stickstoffgehalt von 10,2 bis 12,4 Gew.-%.

Als Weichmacher können die üblichen Weichmacher wie z.B. die Ester von aliphatischen Monocarbonsäuren, wie Cetylacetat, Glykoldiacetat, Stearate, Ricinolacetate, aromatische Monocarbonsäuren, wie z.B. der Dioctyladipat, Dimethylcyclohexylmethyladipat, Dibutylsebacat; aromatischen Dicarbonsäuren, wie z.B. Dibutylphthalat, Dioktylphthalat, Dicyclohexylphthalat, aliphatischen Tricarbonsäuren, wie z.B. Tributylcitrat, anorganischen Säuren, wie z.B. Tributylphosphat, Triphenylphosphat; sowie Sulfonamide, Öle wie Rizinusöl und Leinöl und die Alkoxylierungsprodukte der genannten Verbindungen, wie z.B. ethoxylierte Rizinusöle und Sojaöle, Stearate und Phosphorsäureester eingesetzt werden.

Ganz besonders geeignet sind die Ethoxylierungsprodukte von Weichmachern, wie z.B. ethoxylierte Rizinusöle und Sojaöle.

Als Emulgatoren können gegebenenfalls anionische Emulgatoren, beispielsweise langkettige Alkylarylsulfonate, wie Dodecylbenzol- oder Butylnaphthalinsulfonat, Alkylsulfate, wie Lauryl- oder Stearylalkoholsulfate, Sulfobernsteinsäureester, wie Dioctyldinatriumsuccinat, oder nichtionogene Emulgatoren, wie Octyl- oder Nonylphenoloxethylate mit einem Oxethylierungsgrad von zweckmäßigerweise 4 bis 14 mitverwendet werden. Bevorzugt werden ethoxylierte Verbindungen eingesetzt.

Als Lösungsmittel zur Herstellung der organischen Phase kommen alle für Cellulosenitrat üblichen organischen Lösungsmittel in Betracht.

Vorzugsweise werden Acetate, wie Ethylacetat, Isopropylacetat, Butylacetat, 2-Ethylhexylacetat, Methox-n-butylacetat und Butylglykolat, Ketone wie Methylisobutylketon, Diisobutylketon, 2-Cyclohexylhexanon und Isophoron verwendet.

Es können aber auch cellulosenitrathaltige lösungsmittelfreie Dispersionen, wie z.B. in der DOS 2.703.075 beschrieben, verwendet werden. Diese Dispersionen sollten aber für die Klebstoffherstellung mit den notwendigen organischen Lösungsmitteln, wie sie oben beschrieben sind, versetzt werden.

Zur Herstellung der als Komponente 2) verwendeten Klebstoffharzdispersionen eignen sich Polymerisate aufgebaut vorzugsweise aus den Monomeren Ethylen, Vinylacetat, -chlorid, -laurat, Styrol oder Acrylsäureester. Es können auch Copolymerisate oder Terpolymerisate der genannten Monomeren verwendet werden. Diese wäßrigen Dispersionen haben vorzugsweise einen Feststoffgehalt von 20 - 70 Gew.-%.

Diese Klebstoffharzdispersionen sind bekannt. Es ist auch möglich, die oben aufgeführten Klebstoffharze als selbstemulgierbare Harze einzusetzen.

Als Füllstoff eignen sich bevorzugt mineralische Füllstoffe, wie z.B. Quarzmehl, Quarzsand, Kalksteinmehl.

Als Verdicker eignen sich wasserlösliche, hochviskose Polymere, wie z.B. Xanthangum oder Celluloseether.

Beispiel 1 - 13

a) Es wurde eine wasserverdünnbare Paste, entsprechend der Zusammensetzung der DOS 3.139.840 hergestellt:
In eine Lösung aus

```
    3,98 Gew.-Tle  ethoxyliertes  Rizinusöl  mit  einem
                   EO = 80
   15,90 Gew.-Tle  Dibutylphthalat
    4,54 Gew.-Tle  Diacetonalkohol
   14,77 Gew.-Tle  Ethylglykolacetat
```

wurden
46,24 Gew.-Tle    Cellulosenitrat der Norm E 24, bestehend aus 30 Gew.-Tle Cellulosenitrat und 16,24 Gew.-Tle Wasser
eingearbeitet und homogenisiert. Unter Rühren wurden tropfenweise
14,57 Gew.-Tle    Wasser
eingerührt.
Das Feststoff : Lösungsmittel-Verhältnis beträgt 2,58.

## Tabelle 1

| Stoff | A* | B | C* | D |
|---|---|---|---|---|
| Klebstoffharz-Dispersion (s. Tab. 2) | 50 | 25 | - | - |
| Klebstoffharz (s. Tab. 3) | - | - | 25 | 12,5 |
| Wasser | - | - | 25 | 12,5 |
| cellulosenitrathaltige Paste, gemäß a) | - | 25 | - | 25 |
| Quarzmehl | 50 | 50 | 50 | 50 |
| Verdickungsmittel (Xanthangum) | 0,1 | 0,1 | 0,1 | 0,1 |

\* Vergleichsbeispiel

Diese Klebstoffe wurden auf Eternit-Platten mit einem Kammspachtel aufgekämmt und Steinzeugfliesen eingelegt. Nach einer Lagerung von 7 Tagen bei 21°C und 50 % rel. Luftfeuchtigkeit wurden diese Platten in Wasser gelegt und die Anzahl der Tage bestimmt, bis sich diese Fliesen von den Eternit-Platten lösten.

Die in der Tabelle 2 und 3 aufgeführten Ergebnisse zeigen, daß die Kombination von cellulosenitrathaltigen Pasten und Klebstoffharzdispersionen oder in Wasser emulgierbare Klebstoffharze deutliche Verbesserungen bei Naßlagerung aufzeigt.

EP 0 213 386 B1

## T a b e l l e   2

**Klebstoffharzdispersion**

| Beispiel Nr. | 1 | 2 | 3 | 4 | 5 | 6 | 7 | 8 |
|---|---|---|---|---|---|---|---|---|
| Polymerisat aus | Vinylacetat/Ethylen/ Vinylchlorid/ Vinyllaurat (Vinnapas-Dis. 50/30 VL®) | Ethylen/ Vinylacetat/ Vinylchlorid (Vinnapas-Dis. CEF 10®) | Vinylacetat/Ethylen (Vinnapas-Dis. EP 1®) | Vinylacetat/ Maleinat (Vinnapas-Dis. MV 70 H®) | Vinylacetat (Vinnapas-Dis. DPN 30®) | Vinylacetat (Vinnapas-Dis. Z 50®) | Vinylacetat/ Ethylen/ Vinylchlorid (Vinnapas-Dis. CEZ 16®) | Styrol/ Acrylsäu- reester (Vinna- pas-Dis. SAF 54®) |
| Festkörperge- halt (Gew.-%) | 50 | 50 | 50 | 50 | 50 | 50 | 50 | 50 |
| Dichte (g/cm³) | 1,07 | 1,08 | 1,05 | 1,02 | 1,08 | 1,09 | 1,09 | 1,03 |
| pH-Wert | 4,5 | 6,0 | 4,0 | 6,5 | 5,0 | 4,0 | 4,5 | 7,0 |
| Viskosität (mPa.s) | 2.000±500 | 290±100 | 2.700±500 | 2.000±500 | 10.000±3.000 | 1.300±300 | 2.400±500 | 9.000±3.000 |
| MFT (°C) | 0 | +5 | 0 | 0 | +4 | +16 | +4 | +12 |
| vorherrschende Teilchengröße (µm) | 0,5 - 2,0 | 0,1 | 0,5 - 2,0 | 0,5 - 2,0 | 2,0 | 0,5 - 2,0 | 0,7 | 0,1 |
| Anzahl der Tage bei Wasserlagerung nach | | | | | | | | |
| Rezeptur A | 12 | 2 | 5 | 2 | 2 | 2 | 2 | 13 |
| Rezeptur B | )21 | )21 | 18 | )21 | )21 | )21 | )21 | )21 |

Tabelle 3

Klebstoffharzdispersion - in Wasser emulgierbar

| Beispiel Nr. | 9 | 10 | 11 | 12 | 13 |
|---|---|---|---|---|---|
| Polymerisat aus | Vinylacetat/Ethylen (Vinnapas-Dis. EPMZ 1B) | Vinylacetat/Ethylen (Vinnapas-Dis. RE 545 ZB) | Vinylacetat/Vinylacetat/Vinylacetat/Ethylen (Vinnapas-Dis. RE 524 ZB) | Vinylacetat/Vinyllaurat/Vinylversatat (Vinnapas-Dis. RI 538 ZB) | Vinylacetat/Vinylacetat/Ethylen (Vinnapas-Dis. RE 530 ZB) |
| Festkörpergehalt (Gew.-%) | 99±1 | 99±1 | 99±1 | 99±1 | 99±1 |
| Schüttgewicht (g/l) | 475±50 | 375±50 | 400±50 | 400±50 | 450±50 |
| Antiblockmittelgehalt (%) | 10±2 | 10±1 | 10±2 | 12±2 | 10±2 |
| MFT (°C) | +4 | 0 | +4 | +4 | +4 |
| vorherrschende Teilchengröße (µm) der hergestellten Dispersion | 1 - 5 | 1 - 5 | 1 - 8 | 1 - 9 | 1 - 7 |
| Anzahl der Tage bei Wasserlagerung nach | | | | | |
| Rezeptur C | 2 | 2 | 2 | 2 | 2 |
| Rezeptur D | >21 | >21 | >21 | >21 | >21 |

## Ansprüche

1. Verfahren zum Verkleben von Fliesenbelägen mit einer Klebstoffdispersion, dadurch gekennzeichnet, daß eine Klebstoffdispersion auf Basis von

1) 10 - 95 Gew.-% einer wasserverdünnbaren, cellulosenitrathaltigen Paste oder Gemisch mit einem Gewichtsverhältnis von Feststoff zu organischen Lösungsmitteln > 1

2) 0,1 - 50 Gew.-% einer Klebstoffdispersion oder eines in $H_2O$ emulgierbaren Klebstoffharzes

3) 0 - 70 Gew.-% eines Fliesenkleberfüllstoffes

4) 0 - 75 Gew.-% Wasser

5) 0 - 10 Gew.-% eines üblichen Verdickungsmittels, wobei die Summe aus 1) - 5) immer 100 Gew.-% ergeben muß,

verwendet wird.

**2.** Verfahren nach Anspruch 1, dadurch gekennzeichnet, daß eine Dispersion auf Basis von

1) 15 - 70 Gew.-% einer wasserverdünnbaren, cellulosenitrathaltigen Paste

2) 2 - 40 Gew.-% einer Klebstoffdispersion oder eines in $H_2O$ emulgierbaren Klebstoffharzes

3) 0 - 65 Gew.-% eines Fliesenkleberfüllstoffes

4) 0 - 50 Gew.-% Wasser

5) 0 - 3 Gew.-% eines üblichen Verdickungsmittels

verwendet wird

**3.** Verfahren nach wenigstens einem der vorhergehenden Ansprüche, dadurch gekennzeichnet, daß als Komponente 1 ein Gemisch oder eine Paste aus

a) 5,0 - 60 Gew.-%, vorzugsweise 15 - 45 Gew.-% Cellulosenitrat

b) 0 - 55 Gew.-%, vorzugsweise 0 - 35 Gew.-% Harzen

c) 0,5 - 55 Gew.-%, vorzugsweise 1 - 30 Gew.-% Weichmacher, wovon 0,5 - 100 Gew.-% aus wenigstens einem bekannten alkoxylierten Weichmacher bestehen

d) 0 - 20 Gew.-%, vorzugsweise 0 - 12,5 Gew.-% Emulgatoren

e) 0 - 45 Gew.-%, vorzugsweise 5 - 35 Gew.-% wenigstens eines organischen Lösungsmittels

f) 0 - 30 Gew.-%, vorzugsweise 5 - 25 Gew.-% Wasser

wobei die Summe aus a) - f) immer 100 Gew.-% ergeben und das Gewichtsverhältnis Feststoff zu organischen Lösungsmitteln immer $>$ 1 sein muß,

verwendet wird.

**4.** Verfahren nach wenigstens einem der vorhergehenden Ansprüche, dadurch gekennzeichnet, daß als Komponente 2 Polymerisate, aufgebaut aus Ethylen, Vinylacetat, -chlorid, -laurat, Styrol oder Acrylester, eingesetzt werden.

**5.** Verfahren nach wenigstens einem der vorhergehenden Ansprüche, dadurch gekennzeichnet, daß als Komponente 3 Quarzmehl, Quarzsand oder Kalksteinmehl eingesetzt wird

**6.** Verfahren nach wenigstens einem der vorhergehenden Ansprüche, dadurch gekennzeichnet, daß als Verdickungsmittel Xanthangum oder Celluloseether eingesetzt werden.

## Claims

**1.** Process for bonding tiling using an adhesive solution, characterized in that an adhesive dispersion based on

1) 10 - 95% by weight of a water-dilutable, cellulose nitrate-containing paste or mixture with an organic solids-to-solvent ratio by weight of $>$ 1

2) 0.1 - 50% by weight of an adhesive dispersion or of an adhesive resin which can be emulsified in $H_2O$

3) 0 - 70% by weight of a tile adhesive filler

4) 0 - 75% by weight of water

5) 0 - 10% by weight of a conventional thickener, in which the sum of 1) - 5) must always give 100% by weight, is used.

**2.** Process according to Claim 1, characterized in that a dispersion based on

1) 15 - 70% by weight of a water-dilutable, cellulose nitrate-containing paste

2) 2 - 40% by weight of an adhesive dispersion or of an adhesive resin which can be emulsified in $H_2O$

3) 0 - 65% by weight of a tile adhesive filler

4) 0 - 50% by weight of water

5) 0 - 3% by weight of a conventional thickener is used.

**3.** Process according to at least one of the preceding claims, characterized in that a mixture or a paste of

a) 5.0 - 60% by weight, preferably 15 - 45% by weight, of cellulose nitrate,

b) 0 - 55% by weight, preferably 0 - 35% by weight, of resins

c) 0.5 - 55% by weight, preferably 1 - 30% by weight, of plasticizer, 0.5 - 100% by weight of which comprising at least one known alkoxylated plasticizer

d) 0 - 20% by weight, preferably 0 - 12.5% by weight, of emulsifiers

e) 0 - 45% by weight, preferably 5 - 35% by weight, of at least one organic solvent

f) 0 - 30% by weight, preferably 5 - 25% by weight, of water

in which the sum of a) - f) must always give 100% by weight and the solids-to-organic solvent ratio by weight must always be $\geq$ 1, is used as component 1.

4. Process according to at least one of the preceding claims, characterized in that polymers built up from ethylene, vinyl acetate, vinyl chloride, vinyl laurate, styrene or acrylic esters are used as component 2

5. Process according to at least one of the preceding claims, characterized in that quartz powder, quartz sand or limestone powder is used as component 3.

6. Process according to at least one of the preceding claims, characterized in that xanthan gum or cellulose ethers are used as the thickener.

**Revendications**

1. Procédé pour coller des revêtements en des carreaux ou dalles en matière céramique à l'aide d'une dispersion de colle ou d'adhésif, procédé caractérisé en ce qu'on utilise une dispersion de colle à base de

1) 10 à 95 % en poids d'une pâte ou d'un mélange diluable à l'eau, contenant du nitrate de cellulose, et présentant un rapport pondéral entre la matière sèche et le solvant organique > 1,

2) 0,1 à 50 % en poids d'une dispersion de colle ou d'une résine pour colle émulsifiable dans H$_2$O,

3) 0 à 70 % en poids d'une charge pour col le pour dalles ou carreaux en matière céramiquè,

4) 0 à 75 % en poids d'eau,

5) 0 à 10 % en poids d'un épaississant usuel, la somme des constituants 1) à 5) devant toujours donner 100 %.

2. Procédé selon la revendication 1, caractérisé en ce qu'on utilise une dispersion à base de :

1) 15 à 70 % en poids d'une pâte, diluable à l'eau, contenant du nitrate de cellulose,

2) 2 à 40 % en poids d'une dispersion de colle ou d'une résine pour colle émulsifiable dans H$_2$O,

3) 0 à 65 % en poids d'une charge pour colle pour carreaux ou dalles en matière céramique,

4) 0 à 50 % en poids d'eau,

5) 0 à 3 % en poids d'un épaississant usuel.

3. Procédé selon l'une au moins des revendications précédentes, caractérisé en ce qu'on utilise, comme composant 1), un mélange ou une pâte formé(e) de

a) 5,0 à 60 % en poids, avantageusement 15 à 45 % en poids, de nitrate de cellulose,

b) 0 à 55 % en poids, avantageusement 0 à 35 % en poids, de résine(s),

c) 0,5 à 55 % en poids, avantageusement 1 à 30 % en poids d'un plastifiant, dont 0,5 à 100 % en poids consiste en au moins un plastifiant alcoxylé connu,

d) 0 à 20 % en poids, avantageusement 0 à 12 % en poids d'émulsifiants,

e) 0 à 45 % en poids, avantageusement 5 à 35 % en poids d'au moins un solvant organique,

f) 0 à 30 % en poids, avantageusement 5 à 25 % en poids d'eau,

la somme des constituants a) à f) devant toujours former 100 %, et le rapport pondéral entre la matière sèche et les solvants organiques devant toujours être $\geq$ 1.

4. Procédé selon au moins l'une des revendications précédentes, caractérisé en ce qu on utilise, comme composant 2), des polymères obtenus à partir de l'éthylène, de l'acétate de vinyle, du chlorure de vinyle, de laurate de vinyle, du styrène ou d'un ester acrylique.

5. Procédé selon l'une au moins des revendications précédentes, caractérisé en ce qu'on utilise, comme composant 3), de la farine de quartz, du sable quartzeux ou de la farine de calcaire.

6. Procédé selon l'une au moins des revendications précédentes, caractérisé en ce qu'on utilise comme épaississante de la gomme de xanthane ou de l'éther de cellulose.